# EUROPEAN PATENT SPECIFICATION

(11) **EP 1 720 320 B1**
(45) Date of publication and mention of the grant of the patent: **26.11.2008**
(21) Application number: 05445042.4
(22) Date of filing: 09.06.2005
(51) Int. Cl.: H04L 29/08

(54) **A method and arrangement for handling client-related information in an application server**
Verfahren und Vorrichtung zum Abhandeln von Informationen den Client betreffend in einem Applikationsserver
Procédé et systéme pour traiter des informations d'un client dans un serveur d'applications

(30) Priority: 04.05.2005 SE 0501043
(43) Date of publication of application: 08.11.2006
(73) Proprietor: TELEFONAKTIEBOLAGET LM ERICSSON (publ), 164 83 Stockholm (SE)
(72) Inventor: Boberg, Christer, 137 55 Tungelsta (SE); Lindgren, Anders, 125 74 Älvsjo (SE); Danne, Anders, 164 41 Kista (SE)
(74) Representative: Holmberg, Martin Tor

(56) References cited:
- WO-A-02/39692
- US-A1- 2001 031 641
- HANDLEY M ET AL: "RFC 2543 SIP: Session Initiation Protocol" IETF STANDARD, INTERNET ENGINEERING TASK FORCE, IETF, CH, March 1999 (1999-03), XP015008326 ISSN: 0000-0003
- CAMARILLO G ET AL: "Integrated Services Digital Network (ISDN) User Part (ISUP) to Session Initiation Protocol (SIP) Mapping" IETF STANDARD, INTERNET ENGINEERING TASK FORCE, IETF, CH, December 2002 (2002-12), XP015009155 ISSN: 0000-0003

## Description

### TECHNICAL FIELD

The present invention relates generally to a method and arrangement for handling client-related information in an application server connected to a telecommunication network. In particular, the invention is concerned with reducing the amount of signalling when a client state is maintained in the application server.

### BACKGROUND OF THE INVENTION AND PRIOR ART

With the emergence of 3G mobile telephony, new packet-based communication technologies have been developed for communicating multimedia content. For example, GPRS (General Packet Radio Service) and WCDMA (Wideband Code Division Multiple Access) technologies support wireless multimedia telephony services involving packet-switched communication of data representing images, text, documents, animations, audio files, video files, etc., in addition to traditional circuit-switched voice calls. The term "multimedia content" will be used in this description to represent any data communicated by means of packet-switched transport.

Recently, a network architecture called "IP Multimedia Subsystem" (IMS) has been developed by the 3^{rd} Generation Partnership Project (3GPP) as an open standard, to provide multimedia services for mobile clients in the packet domain. Generally, IMS is a platform for enabling services based on IP transport, more or less independent of the access technology used and basically not restricted to any limited set of specific services.

A specification for session setup has been defined called "SIP" (Session Initiation Protocol, according to the standard IETF RFC 3261 et al), which is an application-layer control (signalling) protocol for creating, modifying and terminating sessions over a packet-switched logic. SIP is generally used by IMS networks for establishing multimedia sessions.

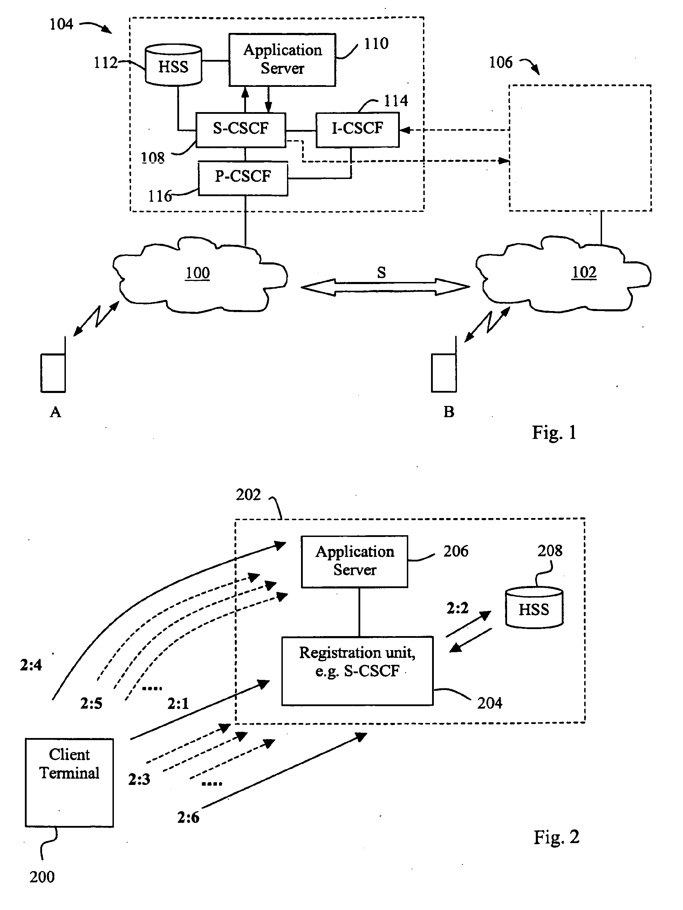

Fig. 1 illustrates schematically a basic network structure for providing multimedia services by means of an IMS service network. It should be noted that the figure is greatly simplified and only shows a selection of network nodes helpful to understand the context of the present invention. A calling mobile terminal A is connected to a first radio access network 100 and communicates with a called mobile terminal B connected to a second radio access network 102, in a communication session S involving one or more multimedia services. Alternatively, terminal A may communicate with a fixed terminal or computer or a content server delivering some multimedia content to the terminal, such as a piece of music, a film or a game.

An IMS network 104 is connected to the first radio access network 100 and handles the session with respect to terminal A, as initiated by its user. In fact, the IMS network 104 receives and processes any service requests or data from the user of terminal A. In this figure, a corresponding IMS network 106 handles the session on behalf of terminal B, and the two IMS networks 104 and 106 may be controlled by different operators. Similarly, the IMS network 106 receives and processes any service requests or data from the user of terminal B. Alternatively, terminals A and B may of course be connected to the same access network and/or belong to the same IMS network.

The illustrated session S is managed, using SIP signalling, by a node called S-CSCF (Serving Call Session Control Function) 108 assigned to terminal A in the IMS network 104, and the used multimedia service is enabled and executed by an application server 110. Basically, the S-CSCF node 108 serves as a proxy for the application server 110 towards terminal A and sends SIP messages from terminal A to the IMS network 106 of terminal B, as indicated by a dashed arrow. Further, a main database element HSS (Home Subscriber Server) 112 stores subscriber and authentication data as well as service information, among other things, that the application server 110 may need to fetch for executing services for clients. Typically, the S-CSCF node 108 fetches information from the HSS 112 to determine which application server 110 to handle a service requested by terminal A, as determined by "triggers" in the HSS 112.

A node called I-CSCF (Interrogating Call Session Control Function) 114 is connected to other IMS networks, in this case network 106, and acts as a gateway for SIP messages from other IMS networks. I-CSCF 114 receives SIP messages from the IMS network 106 of terminal B, as indicated by another dashed arrow. Another node called P-CSCF (Proxy Call Session Control Function) 116 acts as an entry point towards the IMS network 104 from any access network, such as network 100, and all signalling flows between clients and the IMS network 104 are routed through the P-CSCF 116.

The various functions of the I-CSCF and P-CSCF nodes 114, 116 are not necessary to describe here further to understand the context of the present invention. Of course, the IMS network 104 contains numerous other nodes and functions, such as further S-CSCF nodes and application servers, which are not shown here for the sake of simplicity. Basically, the IMS network 106 comprises the same type of nodes as network 104. The shown application server 110 may be configured to provide one or more specific multimedia services to clients.

Two important examples of services that can be employed by means of an IMS network are "Instant Messaging" (IM) and "Presence" services, using SIP signalling for controlling sessions. Instant Messaging involves the transmission of relatively short messages between terminals, e.g. including text, pictures, logos, audio/video clips, etc., in "near real-time", i.e. with small delays. In this context, "Presence" is basically a dynamic and variable state profile of a client, and the presence services basically involve the publishing of "presence data" of a client to make it available for other users, which furthermore can be used to control other services in turn. Presence data basically defines the state of a client and his/her equipment in any predefined respect. Thus, the term "presence" is here given a very broad meaning, and the following "client states" may for example make up the presence data:
- A personal status, e.g. available, busy, in a meeting, on holiday, etc.
- A terminal status, e.g. switched on/off, engaged, out of coverage, etc.
- The geographic location of the client/terminal.
- Terminal capabilities, e.g. functionality for SMS, MMS, chat, IM, video, etc.
- Terminal selections, e.g. call forwarding, language, etc.
- Other client information, e.g. interests, occupations, personal characteristics, moods, personal logos, logo depending on the current mood, etc.

This information, or any selected parts thereof, is stored in an application server in the IMS network, based on so-called "publications of events" received from the network or a client, whenever the client changes any of his/her presence data. According to some services, a client may also subscribe for selected presence data of one or more other users, e.g. according to a list of users. Such presence subscriptions are typically also handled by an application server in the IMS network.

A SIP message called "SIP PUBLISH" is generally used by clients, or rather "User Agent Clients (UAC)", to upload dynamic data to an application server in the IMS network. Publication of data can be used by any service for this purpose, such as PoC, IM, and Presence services. Another SIP message called "SIP SUBSCRIBE" is used by clients to subscribe for dynamic data of other clients, as handled by the application server. In this description, the term "client state" will be used to represent the maintenance of client-related information in an application server during a limited time period as determined by a preset expiry time, sometimes referred to as TTL (Time To Live). Such client-related information may relate to published client data or a client's subscription for data of other users. However, these services may result in a large amount of messages that are sent from clients towards the IMS network, in particular for Presence services.

Thus, a client state for published client data or requested data subscriptions must have an expiry time, such that the published data or data subscription becomes invalid as the time expires. If no expiry time is provided by the client, the application server will use a default expiry time, typically one hour in the Presence case. In the current service implementation and according to the different standards of IETF, 3GPP and OMA, the data publication or subscription must be frequently refreshed in order to maintain the data/subscription valid in the application server, even if the data/subscription is not changed during this period.

A conventional procedure for maintaining published client-related data in an application server will now be described with reference to a block diagram shown in Fig. 2. A client terminal 200 has been powered-on by its user and is currently connected to an access network, not shown, in order to communicate with other terminals and also with a multimedia service network 202, such as an IMS network as described above. The service network 202 includes, among other nodes and components, a "registration unit" 204, an application server 206 and an HSS 208, e.g. in accordance with the IMS network shown in Fig. 1. The registration unit 204 may thus be an S-CSCF node as described above, and generally handles the client's registration with the service network 202. Here, it is assumed that, when initially accessing the access network, a temporary IP address has been assigned to the terminal such that the terminal can generally communicate over IP.

In a first step **2:1,** terminal 200 sends a registration request message to registration unit 204, in order to become registered as an active terminal in the service network 202. Next, the terminal becomes registered in the HSS 208, as indicated in a step **2:2,** according to conventional routines, not further described here. Thereafter, the terminal is obliged to refresh the registration by frequently sending "re-register" messages or the like to the registration unit 204, as generally indicated by dashed arrows **2:3.** Typically, a re-register message must be sent every 30-60 minutes in order to maintain the registration.

At some point during this ongoing routine, terminal 200 sends a client data publication message, e.g. a SIP PUBLISH message, to application server 206, in a step **2:4.** Application server 206 will then store the new client data, which will remain valid during a time-out period, e.g. set to 30 minutes or one hour. Generally, the client data publication message results in the activation of a "client state" in the application server 206 during which the published data is valid. In order to maintain this client state, i.e. the published data, in the application server 206, the terminal must refresh the published data by frequently sending a "re-publish" message before the time-out period expires, as generally indicated by dashed arrows **2:5,** even if the data has not changed. If a client has a multitude of various active client states in the network 104, the burden of sending such refreshing messages can be significant.

If the terminal 200 is eventually turned off, a "de-register" message is finally sent to the registration unit 204, in a step **2:6.** Typically, the terminal is also obliged to send a "de-publish" message, not shown, to the application server 206 to inactivate the published data. Otherwise, the published data will remain valid in the application server 206 until the time-out period finally expires, as from the last re-publish message was sent, even though the terminal has been turned off. This may result in irrelevant active client states after the client has logged off and until the TTL has expired. In particular, this would be the case if terminal 200 accidentally looses its radio connection, e.g. due to battery failure, thereby preventing the sending of a de-publish message.

Basically, the same procedure would be used when the client sends a subscription request for data of other clients, as described above. In that case, the message of step 2:4 would be a subscription request message, e.g. a SIP SUBSCRIBE message, resulting in the activation of another client state in the application server 206. Furthermore, the refreshing messages of step 2:5 would be a frequently-sent "re-subscribe" message in order to maintain this client state. However, there are some problems associated with having the client's terminal 200 frequently sending re-publish and/or re-subscribe messages, as explained below.

In the current solution, the client must either refresh the published data or data subscription with quite high frequency, or increase the expiry time for the published data, for the following reasons. Firstly, in order to keep client states up-to-date in application servers, it is generally desired to have a short expiry time for a client state, e.g. published data or a data subscription, and as a result it is necessary to refresh the publication quite frequently. A major reason for having a short expiry time is also the fact that the application server 206 will not know whether a client has been shut down without sending a de-publish or de-subscribe message to change the state of the data or subscription to "off". The client state is then maintained in vain and unnecessary notifications may be frequently sent towards a terminal that cannot receive them but still has an active subscription for data of other clients, until the TTL expires.

Secondly, this behaviour results in a huge amount of extra load on both the service network 202 as well as the used access network, which in the IMS case is normally based on radio access. In addition, in the case of a mobile client, the frequent sending of re-publish or re-subscribe messages, as in step 2:5 above, will drain the terminal battery and consume precious radio bandwidth. Therefore, it would be advantageous to have a relatively long expiry time for a client state with respect to the signalling load. Hence, in the conventional solution described above, the expiry time for client states in application servers must inevitably be set in a compromise between these conflicting factors.

HANDLEY M ET AL: RFC 2543 SIP: Session Initiation Protocol" IETF STANDARD, INTERNET ENGINEERING TASK FORCE, IETF, CH, March 1999 (1999-03), XP015008326 ISSN: 0000-0003 describes processing rules for proxy servers. Requests from clients are generally passed on, possibly after translation, by the proxy server to other servers. It is also disclosed that a.stateful proxy remembers an incoming request that has generated outgoing requests, and the outgoing requests.

CAMARILLO G ET AL: "Integrated Services Digital Network (ISDN) to Session Initiation Protocol (SIP) mapping" IETF STANDARD, INTERNET ENGINEERING TASK FORCE, IETF, CH, December 2002 (2002-12), XP015009155 ISSN: 0000-0003 discloses a way to perform mapping between two signalling protocols: SIP and ISUP of SS7, when SIP is used for a call involving interworking with PSDN. The mapping is performed by a Media Gateway Controller MGC.

### SUMMARY

The object of the present invention is to reduce or eliminate the problems outlined above. In particular, it is an object of the present invention to provide a solution for reducing the signalling load from clients having active client states in application servers. Another object of the present invention is to provide a solution for keeping client-related information in an application server up-to-date using a minimum of signalling messages.

These objects and others are obtained by providing a method and arrangement for handling client-related information in an application server connected to a telecommunication network, for a client which has registered with said telecommunication network. In the inventive method, a message is first received from the client that results in the activation of a client state in the application server. Registration events, i.e. events when the client's registration is changed, are then monitored. At some point, a registration event notification concerning the client is received and the client state is updated in response to the received registration event notification.

The message received from the client may include the publication of client data or a subscription request for client data, or may be a session initiation message, e.g. SIP INVITE. The step of monitoring registration events may include creating a subscription for registration events, or registration events of a third party may be monitored.

The received registration event notification typically indicates that the client's registration with the telecommunication network has been inactivated. The client's registration may have been inactivated when receiving a de-register message from the client. Typically, the client's registration with the telecommunication network has a limited time of validity and the client's registration with the telecommunication network may have been inactivated when the time of registration validity has expired. The client state is preferably inactivated in the application server in response to inactivation of the client's registration with the telecommunication network.

Typically, also the client state in the application server has a limited time of validity, and the expiry time of client state validity is then preferably set significantly longer than the expiry time of registration validity. For example, the expiry time of state validity may be set to at least 10 times the expiry time of registration validity.

The telecommunication network may be an IMS network, and said registration event notification is then received from an S-CSCF node that handles the client's registration with said IMS network. In this case, SIP is used for communicating messages with the client.

The present invention further encompasses an arrangement in an application server connected to a telecommunication network, for handling client-related informati.on for a client who has registered with said telecommunication network. The inventive arrangement includes means for receiving a message from the client that results in the activation of a client state in the application server, means for monitoring registration events, i.e. events when said client registration is changed, means for receiving a registration event notification concerning the client, and means for updating said client state in response to the received registration event notification.

The arrangement may further comprise means for receiving said message from the client including the publication of client data, means for receiving said message from the client including a subscription request for client data, and means for receiving said message from the client as a session initiation message, e.g. SIP INVITE. The means for monitoring registration events may be adapted to create a subscription for registration events, or to monitor registration events of a third party.

The arrangement may further comprise means for receiving said registration event notification indicating that the client's registration with said service network has been inactivated. The client's registration with said service network may have been inactivated when receiving a de-register message from the client. Typically, the client's registration with said service network has a limited time of validity, and the client's registration with said service network may have been inactivated when the time of registration validity has expired.

The arrangement may further comprise means for inactivat.ing said client state in response to inactivation of the client's registration with the telecommunication network. Typically, also the client state in the application server has a limited time of validity. The arrangement may then further comprise means for setting the expiry time of client state validity significantly longer than the expiry time of registration validity, and preferably means for setting the expiry time of client state validity to at least 10 times the expiry time of registration validity.

The telecommunication network is typically an IMS network, and said registration event notification is then received from an S-CSCF node that handles the client's registration with said IMS network. In this case, SIP is used for communicating messages with the client.

Further preferred features of the present invention and its benefits will be explained in the detailed description below.

### BRIEF DESCRIPTION OF THE DRAWINGS

The present invention will now be described in more detail by means of preferred embodiments and with reference to the accompanying drawings, in which:
- Fig. 1 is a schematic overview of a basic communication scenario in which the present invention can be used.
- Fig. 2 is a block diagram illustrating a conventional procedure for maintaining client data in an application server.
- Fig. 3 is a block diagram illustrating a procedure for handling client-related information in an application server, in accordance with the present invention.
- Fig. 4 is a signalling diagram illustrating one embodiment of a procedure for maintaining client data, in accordance with the present invention.

### DESCRIPTION OF PREFERRED EMBODIMENTS

Basically, the present invention utilises the existing routine of the client sending re-registration messages to a registration unit, e.g. as described in step 2:3 of Fig. 2 above, to also "refresh" any client states activated in an application server, e.g. for published data or data subscriptions. In this way, in addition to refreshing the client registration, published data or data subscriptions can be automatically refreshed without having the client frequently sending specific re-publish and re-subscribe messages to the application server.

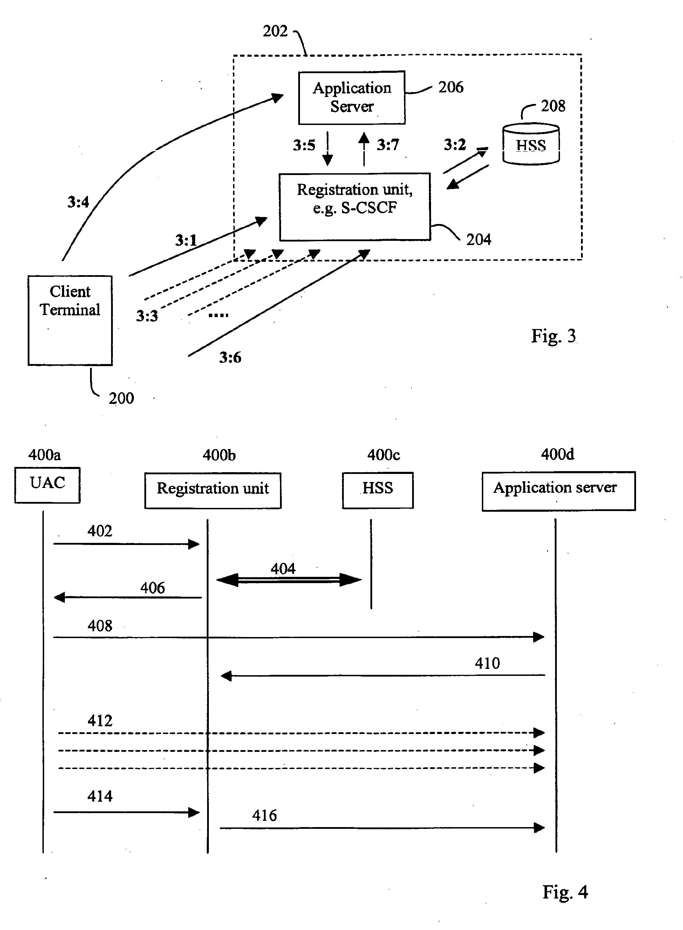

The present solution will now be described with reference to a block diagram shown in Fig. 3, using the same reference numerals as in Fig. 2 for corresponding elements. Also, the first part of the procedure is basically the same as described in connection with Fig. 2. Thus, terminal 200 sends a registration request message in a first step **3:1,** and the terminal is registered in the HSS 208 in a next step **3:2.** Further, it is still required that the terminal frequently sends re-registration messages to the registration unit 204, indicated by a step **3:3,** in order to keep the registration "alive" and valid.

At some point during this ongoing procedure, terminal 200 sends a message to application server 206, in a step **3:4,** that generally results in the activation of a client state in the application server. As explained above, this message is typically a client data publication message or a data subscription request message, but may also be a session initiation message, e.g. SIP INVITE, if the session remains active for a long time. Application server 206 will then maintain a client state involving some client-related information, typically relating to published data or a subscription for data.

However, in order to avoid the sending of frequent refresh messages for maintaining this client state in the application server 206, the application server 206 starts to monitor registration events related to the client's registration. In this example, the application server 206 sends a subscription request for registration events to the registration unit 204, in a step **3:5.** Alternatively, registration events of a third party may be monitored.

In this description, the term "registration events" refers to any events when the client registration is changed, as handled by the registration unit 204 in this example. One important registration event is when the client has sent a de-register message, as in step 2:6 of Fig. 2 above, and the client's registration is consequently inactivated in the service network 202. The client's registration may also be inactivated if no refreshing re-registration messages has been received during the latest time-out period, e.g. due to lost radio contact or empty battery.

Thus, if the registration unit 204 receives a de-register message from the client 200, in a step **3:6,** it will send a registration event notification concerning the client to the application server 206, in a next step **3:7,** informing the application server that the client is no longer registered as active in the service network 202. The same registration event notification may be sent if the registration has timed-out without being refreshed. As a result, the application server 206 will finally update the client state in response to the received registration event notification. Typically, it will inactivate the client state in response to inactivation of the client's registration with the service network.

In this solution, the terminal is not required to refresh the published data by frequently sending a "re-publish" message, although it may of course send further publish messages, as in step 3:4, whenever the published data has changed. Since the application server can now rely on registration event notifications from the registration unit 204 for controlling the client state, the expiry time for the client state can be set very long to ensure that practically no refreshing re-publish or re-subscribe messages are sent from the client 200. Preferably, the expiry time for the client state is set significantly longer than the expiry time for the client registration, e.g. 10 times or more. This will significantly decrease the amount of signalling from the client, and the client-related information stored in the application server will still be kept up-to-date.

Of course, the client may still send a specific de-publish or de-subscribe message, not shown, to the application server 206 to inactivate the client state, which however does not affect the present inventive solution.

An exemplary signalling procedure according to a preferred embodiment will now be described for a client publishing data, with reference to Fig. 4. The figure shows a User Agent Client UAC 400a operating in a client terminal, a registration unit 400b, an HSS 400c and an application server 400d, which may all be equal to the corresponding elements in Fig. 3. In the present example, SIP signalling is used in an IMS network. It should be noted that in an IMS network, basically all the signalling with the client is actually handled by a P-CSCF node, as described in the background section, although omitted in this figure for the sake of simplicity.

When the client starts his/her terminal 400a, a User Agent Client UAC therein will send a SIP REGISTER message to the registration unit 400b, in a first **step 402,** to register a "Public User Identity, PUI" and tie it to the IP-address assigned to the terminal. In response thereto, the UAC 400a is registered in the network by means of a signalling dialog between the registration unit 400b and the HSS 400c, as schematically illustrated in a **step 404.** After establishing the client's registration, registration unit 400b sends a SIP 200 OK message to UAC 400a, in a **step 406.**

The UAC 400a will also frequently send refresh REGISTER messages, not shown, to the registration unit 400b to maintain the registration. The registration unit 400b will keep the registration active and use a timer function determining when the registered PUI shall be de-registered if the timer has expired. When the registration has expired, that PUI is unavailable for communication on that device. Further, when a UAC wants to initiate, modify or remove data on application server 400d, generally referred to as the publishing of data, it will send a new PUBLISH message to the application server 400d. It should be noted that several different UAC's may use the same terminal, and any of those can send PUBLISH messages to initiate or modify its particular service data.

In a further **step 408,** an initial SIP PUBLISH message is sent from UAC 400a for a certain PUI to the application server 400d. In response thereto, application server 400d initiates a subscription for registration events, by sending a subscription request, SIP SUBSCRIBE (reg. Events), in a **step 410** to the registration unit 400b, in order to be informed on any changes in the registration state of the PUI. Alternatively, the registration unit 400b may use third party registrations to always send registration events to the application server 400d.

The application server 400d will now know when a PUI has been de-registered since the registration unit 400b has a time-out function related to the registration TTL, without requiring the UAC to send re-PUBLISH messages. To minimize the traffic between the registration unit 400b and the application server 400d, application server 400d may only subscribe for de-registering events, since there is no point for the application server 400d to be informed about registration refreshing messages. In fact, the application server 400d needs no active timer for the published data at all, since it can safely trust that it will be informed by the registration unit 400b if a de-registration occurs. The UAC 400a may still send PUBLISH messages to the application server 400d as usual whenever the state of the published data needs to be changed, as indicated by optional **steps 412.**

Eventually, when the client's terminal is powered off, a SIP REGISTER (off) message is sent from UAC 400a to the registration unit 400b in a **step 414.** The published data is then invalidated as registration unit 400b sends a SIP NOTIFY (reg. Event(off)) message to application server 400d, in a final **step 416.**

While the invention has been described with reference to specific exemplary embodiments, the description is generally only intended to illustrate the inventive concept and should not be taken as limiting the scope of the invention, which is defined by the appended claims.

## Claims

1. A method of handling client-related information in an application server (206) connected to a telecommunication network (202), for a client (200) which has registered with a registration unit (204) in said telecommunication network, the client being required to send one or more re-registration messages (3:3) to the registration unit in order to maintain the client registration, comprising the following steps as executed by said application server:
- receiving a message (3:4) from the client that results in the activation of a client state in the application server, the client state being maintained in the application server by means of said re-registration messages to the registration unit,
- monitoring registration events, referring to events when the client's registration in the registration unit is changed, **characterized by** the steps of :
- receiving a registration event notification (3:7) from the registration unit when the client,'s registration in the registration unit has been changed, and
- updating said client state in response to the received registration event notification.

2. A method according to claim 1, wherein said message (3:4) received from the client includes publication of client data.

3. A method according to claim 1, wherein said message (3:4) received from the client includes a subscription request for client data.

4. A method according to claim 1, wherein said message (3:4) received from the client is a session initiation message

5. A method according to any of claims 1-4, wherein said step of monitoring registration events includes creating a subscription (3:5) in the registration unit for registration events of said client.

6. A method according to any of claims 1-4, wherein said step of monitoring registration events includes monitoring registration events of a third party.

7. A method according to any of claims 1-6, wherein the received registration event notification indicates that the client's registration with said telecommunication network has been inactivated.

8. A method according to claim 7, wherein the Client's registration with said telecommunication network has been inactivated when the registration unit has received a de-register message (3:6) from the client.

9. A method according to claim 7, wherein the client's registration with said telecommunication network has a limited time of registration validity, and the client's registration with said telecommunication network has been inactivated when the time of registration validity has expired.

10. A method according to any of claims 7-9, wherein said client state is inactivated in the application server in response to said inactivation of the client's registration with the telecommunication network.

11. A method according to claims 9 and 10, wherein the client state in the application server has a limited time of validity, and the expiry time of client state validity is set longer than the expiry time of registration validity.

12. A method according to claim 11, wherein the expiry time of client state validity is set to at least 10 times the expiry time of registration validity.

13. A method according to any of claims 1-12, wherein the telecommunication network is an IMS network, and the registration unit is an S-CSCF node from which said registration event notification is received.

14. A method according to claim 13, wherein SIP is used for communicating messages with the client.

15. An arrangement in an application server (206) connected to a telecommunication network (202), for handling client-related information for a client (200) which has registered with a registration unit (204) in said telecommunication network, the client being required to send one or more re-registration messages (3:3) to the registration unit in order to maintain the client registration, the arrangement comprising:
- means for receiving a message (3:4) from the client that results in the activation of a client state in the application server, the client state being maintained in the application server by means of said re-registration messages to the registration unit,
- means for monitoring registration events, referring to events when said client registration in the registration unit is changed, and being **characterized by** :
- means for receiving a registration event notification (3:7) from the registration unit when the client registration in the registration unit has been changed, and
- means for updating said client state in response to the received registration event notification.

16. An arrangement according to claim 15, further comprising means for receiving said message (3:4) from the client including publication of client data.

17. An arrangement according to claim 15 or 16, further comprising means for receiving said message (3:4) from the client including a subscription request for client data.

18. An arrangement according to any of claims 15-17, further comprising means for receiving said message (3:4) from the client as a session initiation message, e.g. SIP INVITE.

19. An arrangement according to any of claims 15-18, wherein said means for monitoring registration events is adapted to create a subscription (3:5) in the registration unit for registration events of said client.

20. An arrangement according to any of claims 15-19, wherein said means for monitoring registration events is adapted to monitor registration events of a third party.

21. An arrangement according to any of claims 15-20, wherein the received registration event notification indicates that the client's registration with said telecommunication network has been inactivated.

22. An arrangement according to claim 21, wherein the client's registration with said telecommunication network has been inactivated when the registration unit has received a de-register message (3:6) from the client.

23. An arrangement according to claim 21, wherein the client's registration with said telecommunication network has a limited time of registration validity, and the client's registration with said telecommunication network has been inactivated when the time of registration validity has expired.

24. An arrangement according to any of claims 21-23, further comprising means for inactivating said client state in response to said inactivation of the client's registration with the telecommunication network.

25. An arrangement according to claims 23 and 24, wherein the client state in the application server has a limited time of validity, further comprising means for setting the expiry time of client state validity longer than the expiry time of registration validity.

26. An arrangement according to claim 25, further comprising means for setting the expiry time of client state validity to at least 10 times the expiry time of registration validity.

27. An arrangement according to any of claims 15-26, wherein the telecommunication network is.an IMS network, and the registration unit is an S-CSCF node from which said registration event notification is received.

28. An arrangement according to claim 27, wherein SIP is used for communicating messages with the client.

## Patentansprüche

1. Ein Verfahren zum Handhaben von Client-bezogener Information in einem Anwendungsserver (206), verbunden mit einem Telekommunikationsnetzwerk (202) für einen Client (200), der registriert wurde bei einer Registrierungseinheit (204) in dem Telekommunikationsnetzwerk, wobei von dem Client verlangt wird, eine oder mehrere Re-Registrierungsnachrichten (3:3) an die Registrierungseinheit zu senden, um die Client-Registrierung aufrecht zu erhalten, umfassend die folgenden Schritte, wie ausgeführt durch den Anwendungsserver:
- Empfangen einer Nachricht (3:4) von dem Client, die aus der Aktivierung eines Client-Zustands in dem Anwendungsserver resultiert, wobei der Client-Zustand aufrechterhalten wird in dem Anwendungsserver mittels der Reregistrierungsnachrichten an die Registrierungseinheit,
- Überwachen von Registrierungsereignissen, die Bezug nehmen auf Ereignisse, wenn die Registrierung des Clients in der Registrierungseinheit verändert wird,
**gekennzeichnet durch** die Schritte:
- Empfangen einer Registrierungsereignismitteilung (3:7) von der Registrierungseinheit, wenn die Registrierung des clients in der Registrierungseinheit verändert wurde, und
- Aktualisieren des Client-Zustands in Ansprechen auf die empfangene Registrierungsereignismitteilung.

2. Ein Verfahren nach Anspruch 1, wobei die Nachricht (3:4), empfangen von dem Client, eine Veröffentlichung von Client-Daten enthält.

3. Ein Verfahren nach Anspruch 1, wobei die Nachricht (3:4), empfangen von dem Client, eine Teilnehmeranforderung für Client-Daten enthält.

4. Ein Verfahren nach Anspruch 1, wobei die Nachricht (3:4), empfangen von dem Client, eine Session-Initiierungsnachricht bzw. Session Initiation Message ist.

5. Ein Verfahren nach einem der Ansprüche 1-4, wobei der Schritt eines Überwachens von Registrierungsereignissen ein Erzeugen einer Teilnahme (3:5) in der Registrierungseinheit enthält für Registrierungsereignisse des Clients.

6. Ein Verfahren nach einem der Ansprüche 1-4, wobei,der Schritt eines Überwachens von Registrierungsereignissen Überwachen von Registrierungsereignissen eines Dritten enthält.

7. Ein Verfahren nach einem der Ansprüche 1-6, wobei die empfangene Registrierungsereignismitteilung kennzeichnet, dass die Registrierung des Clients bei dem Telekommunikationsnetzwerk inaktiviert wurde.

8. Ein Verfahren nach Anspruch 7, wobei die Registrierung des Clients bei dem Telekommunikationsnetzwerk inaktiviert wurde, wenn die Registrierungseinheit eine De-Registernachricht (3:6) von dem client empfangen hat.

9. Ein Verfahren nach Anspruch 7, wobei die Registrierung des Clients bei dem Telekommunikationsnetzwerk eine begrenzte Zeit der Registrierungsgültigkeit aufweist, und die Registrierung des Clients bei dem Telekommunikationsnetzwerk inaktiviert wurde, wenn die Zeit einer Registrierungsgültigkeit abgelaufen ist.

10. Ein Verfahren nach einem der Ansprüche 7-9, wobei der Client-Zustand inaktiviert wird in dem Anwendungsserver in Ansprechen auf die Inaktivierung der Registrierung des Clients mit dem Telekommunikationsnetzwerk.

11. Ein Verfahren nach Ansprüchen 9 und 10, wobei der Client-Zustand in dem Anwendungsserver eine begrenzte Zeit der Gültigkeit aufweist, und Ablaufzeit der Client-Zustandsgültigkeit länger eingestellt wird als die Ablaufzeit der Registrierungsgültigkeit.

12. Ein Verfahren nach Anspruch 11, wobei die Ablaufzeit der Client-Zustandsgültigkeit eingestellt wird auf mindestens 10-mal der Ablaufzeit der Registrierungsgültigkeit.

13. Ein Verfahren nach einem der Ansprüche 1-12, wobei das Telekommunikationsnetzwerk ein IMS-Netzwerk ist, und die Registrierungseinheit ein S-CSCF-Knoten ist, von dem die Registrierungsereignismitteilung empfangen wird.

14. Ein Verfahren nach Anspruch 13, wobei SIP verwendet wird zum Kommunizieren von Nachrichten mit dem Client.

15. Eine Anordnung in Anwendungsserver (206), verbunden mit einem Telekommunikationsnetzwerk (202), zum Handhaben von Client-bezogener Information für einen Client (200), der bei einer Registrierungseinheit (204) in dem Telekommunikationsnetzwerk registriert wurde, wobei von dem Client verlangt wird, eine oder mehrere Re-Registrierungsnachrichten (3:3) an die Registrierungseinheit zu senden, um die Client-Registrierung aufrecht zu erhalten, die Anordnung umfassend:
- Mittel zum Empfangen einer Nachricht (3:4) von dem Client, die in der Aktivierung eines Client-Zustands in dem Anwendungsserver resultiert, wobei der Client-Zustand aufrechterhalten wird in dem Anwendungsserver mittels der Re-Registrierungsnachrichten an die Registrierungseinheit,
- Mittel zum Überwachen von Registrierungsereignissen, die Bezug nehmen auf Ereignisse, wenn die Client-Registrierung in der Registrierungseinheit geändert wird,
und **gekennzeichnet durch**:
- Mittel zum Empfangen einer Registrierungsereignismitteilung (3:7) von der Registrierungseinheit, wenn die Client-Registrierung in der Registrierungseinheit geändert wurde, und
- Mittel zum Aktualisieren des Client-Zustands in Ansprechen auf die empfangene Registrierungsereignismitteilung.

16. Eine Anordnung nach Anspruch 15, ferner umfassend Mittel zum Empfangen der Nachricht (3:4), von dem Client, einschließlich einer Veröffentlichung der Client-Daten.

17. Eine Anordnung nach Anspruch 15 oder 16, ferner umfassend Mittel zum Empfangen der Nachricht (3:4) von dem Client, einschließlich einer Teilnehmeranforderung für Client-Daten.

18. Eine Anordnung nach einem der Ansprüche 15-17, ferner umfassend Mittel zum Empfangen der Nachricht (3:4) von dem Client als eine Session-Initiierungsnachricht bzw. Session Initiation Message, beispielsweise SIP INVITE.

19. Eine Anordnung nach einem der Ansprüche 15-18, wobei das Mittel zum Überwachen von Registrierungsereignissen ausgebildet ist zum Erzeugen einer Teilnahme bzw. Subscription (3:5) in der Registrierungseinheit für Registrierungsereignisse des Clients.

20. Eine Anordnung nach einem der Ansprüche 15-19, wobei das Mittel zum Überwachen von Registrierungsereignissen ausgebildet ist zum Überwachen von Registrierungsereignissen eines Dritten.

21. Eine Anordnung nach einem der Ansprüche 15-20, wobei die empfangene Registrierungsereignismitteilung kennzeichnet, dass die Registrierung des Clients bei dem Telekommunikationsnetzwerk inaktiviert wurde.

22. Eine Anordnung nach Anspruch 21, wobei die Registrierung des Clients bei dem Telekommunikationsnetzwerk inaktiviert wurde, wenn die Registrierungseinheit eine De-Registriernachricht (3:6) von dem Client empfangen hat.

23. Eine Anordnung nach Anspruch 21, wobei die Registrierung des Clients bei dem Telekommunikationsnetzwerk eine begrenzte Zeit der Registrierungsgültigkeit aufweist, und die Registrierung des Clients bei dem Telekommunikationsnetzwerk inaktiviert wurde, wenn die Zeit einer Registrierungsgültigkeit abgelaufen ist.

24. Eine Anordnung nach einem der Ansprüche 21-23, ferner umfassend Mittel zum Inaktivieren des Client-Zustands in Ansprechen auf die Inaktivierung der Registrierung des Clients bei dem Telekommunikationsnetzwerk.

25. Eine Anordnung nach Ansprüchen 23 und 24, wobei der Client-Zustand in dem Anwendungsserver eine begrenzte Zeit der Gültigkeit aufweist, ferner umfassend Mittel zum Einstellen der Ablaufzeit der Client-Zustandsgültigkeit länger als die Anlaufzeit der Registrierungsgültigkeit.

26. Eine Anordnung nach Anspruch 25, ferner umfassend Mittel zum Einstellen der Ablaufzeit der Client-Zustandsgültigkeit auf mindestens 10-mal der Ablaufzeit der Registrierungsgültigkeit.

27. Eine Anordnung nach einem der Ansprüche 15-26, wobei das Telekommunikationsnetzwerk ein IMS-Netzwerk ist, und die Registrierungseinheit ein S-CSCF-Knoten ist, von dem die Registrierungsereignismitteilung empfangen wird.

28. Eine Anordnung nach Anspruch 27, wobei SIP verwendet wird zum Kommunizieren von Nachrichten mit dem Client.

## Revendications

1. Procédé de traitement d'informations liées à un client dans un serveur (206) d'applications connecté à un réseau (202) de télécommunications, pour un client (200) qui s'est inscrit avec une unité d'inscription (204) dans ledit réseau de télécommunications, l'envoi d'un ou plusieurs messages de réinscription (3:3) à l'unité d'inscription étant demandé au client pour maintenir l'inscription du client, comprenant les étapes suivantes telles qu'exécutées par ledit serveur d'applications :
- la réception d'un message (3:4) provenant du client qui résulte de l'activation d'un état du client dans le serveur d'applications, l'état du client étant maintenu dans le serveur d'applications au moyen desdits messages de réinscription pour l'unité d'inscription,
- le contrôle d'événements d'inscription, faisant référence à des événements ayant lieu lorsque l'inscription du client dans l'unité d'inscription est modifiée,
**caractérisé par** les étapes de :
- réception d'une notification (3:7) d'événement d'inscription provenant de l'unité d'inscription lorsque l'inscription du client dans l'unité d'inscription a été modifiée, et
la mise à jour dudit état du client en réponse à la notification reçue d'événement d'inscription.

2. Procédé selon la revendication 1, dans lequel ledit message (3:4) reçu du client comprend une publication de données du client.

3. Procédé selon la revendication 1, dans lequel ledit message (3:4) reçu du client comprend une demande d'adhésion pour des données du client.

4. Procédé selon la revendication 1, dans lequel ledit message (3:4) reçu du client est un message de commencement de session.

5. Procédé selon l'une quelconque des revendications 1 à 4, dans lequel ladite étape de contrôle d'événements d'inscription comprend la création d'une adhésion (3:5) dans l'unité d'inscription pour des événements d'inscription dudit client.

6. Procédé selon l'une quelconque des revendications 1 à 4, dans lequel ladite étape de contrôle d'événements d'inscription comprend un contrôle d'événements d'inscription d'une tierce partie.

7. Procédé selon l'une quelconque des revendications 1 à 6, dans lequel la notification reçue d'événement d'inscription indique que l'inscription du client avec ledit réseau de télécommunications a été inactivée.

8. Procédé selon la revendication 7, dans lequel l'inscription du client avec ledit réseau de télécommunications a été inactivée lorsque l'unité d'inscription a reçu un message de désinscription (3:6) provenant du client.

9. Procédé selon la revendication 7, dans lequel l'inscription du client avec ledit réseau de télécommunications a un temps limité de validité d'inscription, et l'inscription du client avec ledit réseau de télécommunications a été inactivée lorsque le temps de validité d'inscription a expiré.

10. Procédé selon l'une quelconque des revendications 7 à 9, dans lequel ledit état du client est inactivé dans le serveur d'applications en réponse à ladite inactivation de l'inscription du client avec le réseau de télécommunications.

11. Procédé selon les revendications 9 et 10, dans lequel l'état du client dans le serveur d'applications a un temps limité de validité, et le temps d'expiration de la validité de l'état du client est établi de façon à être plus long que le temps d'expiration de la validité de l'inscription.

12. Procédé selon la revendication 11, dans lequel le temps d'expiration de la validité de l'état du client est établi de façon à être au moins égal à 10 fois le temps d'expiration de la validité de l'inscription.

13. Procédé selon l'une quelconque des revendications 1 à 12, dans lequel le réseau de télécommunications est un réseau IMS, et l'unité d'inscription est un noeud S-CSCF depuis lequel ladite notification d'événement d'inscription est reçue.

14. Procédé selon la revendication 13, dans lequel un SIP est utilisé pour la communication de messages avec le client.

15. Agencement dans un serveur d'applications (206) connecté à un réseau de télécommunications (202), pour traiter des informations liées à un client pour un client (200) qui s'est inscrit avec une unité d'inscription (204) dans ledit réseau de télécommunications, l'envoi d'un ou plusieurs messages de réinscription (3:3) à l'unité d'inscription étant demandé au client afin de maintenir l'inscription du client, l'agencement comportant :
- des moyens destinés à recevoir un message (3:4) provenant du client ayant pour résultat l'activation d'un état du client dans le serveur d'applications, l'état du client étant maintenu dans le serveur d'applications au moyen desdits messages de réinscription fournis à l'unité d'inscription,
- des moyens pour contrôler des événements d'inscription, faisant référence à des événements ayant lieu lorsque ladite inscription du client dans l'unité d'inscription est modifiée,
et **caractérisé par** :
- des moyens destinés à recevoir une notification (3:7) d'événement d'inscription provenant de l'unité d'inscription lorsque l'inscription du client dans l'unité d'inscription a été modifiée, et
- des moyens destinés à mettre à jour ledit état du client en réponse à la notification reçue d'événement d'inscription.

16. Agencement selon la revendication 15, comportant en outre des moyens destinés à recevoir ledit message (3:4) provenant du client, comprenant une publication de données du client.

17. Agencement selon la revendication 15 ou 16, comportant en outre des moyens destinés à recevoir ledit message (3:4) provenant du client, comprenant une demande d'adhésion pour des données du client.

18. Agencement selon l'une quelconque des revendications 15 à 17, comportant en outre des moyens destinés à recevoir ledit message (3:4) provenant du client, sous la forme d'un message de commencement de session, par exemple un message SIP INVITE.

19. Agencement selon l'une quelconque des revendications 15 à 18, dans lequel lesdits moyens pour contrôler des événements d'inscription sont conçus pour créer une adhésion (3:5) dans l'unité d'inscription pour des événements d'inscription dudit client.

20. Agencement selon l'une quelconque des revendications 15 à 19, dans lequel lesdits moyens destinés à contrôler des événements d'inscription sont conçus pour contrôler des événements d'inscription d'une tierce partie.

21. Agencement selon l'une quelconque des revendications 15 à 20, dans lequel la notification reçue d'événement d'inscription indique que l'inscription du client avec ledit réseau de télécommunications a été inactivée.

22. Agencement selon la revendication 21, dans lequel l'inscription du client avec ledit réseau de télécommunications a été inactivée lorsque l'unité d'inscription a reçu un message de désinscription (3:6) provenant du client.

23. Agencement selon la revendication 21, dans lequel l'inscription du client avec ledit réseau de télécommunications a un temps limité de validité d'inscription, et l'inscription du client avec ledit réseau de télécommunications a été inactivée lorsque le temps de validité d'inscription a expiré.

24. Agencement selon l'une quelconque des revendications 21 à 23, comportant en outre des moyens destinés à inactiver ledit état du client en réponse à ladite inactivation de l'inscription du client avec le réseau de télécommunications.

25. Agencement selon les revendications 23 et 24, dans lequel l'état du client dans le serveur d'applications a un temps limité de validité, comportant en outre des moyens destinés à établir le temps d'expiration de la validité de l'état du client afin qu'il soit plus long que le temps d'expiration de la validité de l'inscription.

26. Agencement selon la revendication 25, comportant en outre des moyens destinés à établir le temps d'expiration de la validité de l'état du client afin qu'il soit égal à au moins 10 fois le temps d'expiration de la validité de l'inscription.

27. Agencement selon l'une quelconque des revendications 15 à 26, dans lequel le réseau de télécommunications est un réseau IMS, et l'unité d'inscription est un noeud S-CSCF depuis lequel ladite notification d'événement d'inscription est reçue.

28. Agencement selon la revendication 27, dans lequel un message SIP est utilisé pour la communication de messages avec le client.
